# EUROPÄISCHE PATENTSCHRIFT

(11) **EP 1 464 592 B1**
(45) Veröffentlichungstag und Bekanntmachung des Hinweises auf die Patenterteilung: **21.06.2006**
(21) Anmeldenummer: 04006987.4
(22) Anmeldetag: 23.03.2004
(51) Int. Cl.: B65G 1/127, B65G 39/06, B65G 1/04

(54) **Lagerregal mit geräuschreduzierten Stützrollen**
Storage rack with noise reducing support rollers
Rayonnage de stockage avec rouleaux de support permettant de diminuer le bruit

(30) Priorität: 01.04.2003 DE 20305240 U
(43) Veröffentlichungstag der Anmeldung: 06.10.2004
(73) Patentinhaber: HÄNEL & CO., CH-9450 Altstätten SG (CH)
(72) Erfinder: Wurm, Hermann, 74223 Flein (DE)
(74) Vertreter: Preissner, Nicolaus

(56) Entgegenhaltungen:
- EP-A- 0 722 894
- DE-A- 3 912 766
- DE-U- 1 724 200
- DE-U- 20 305 240
- DE-U- 29 520 735

## Beschreibung

Die Erfindung betrifft ein Lagerregal mit einer Vielzahl von übereinander liegenden und beabstandeten Trägerauflagen, die paarweise an sich gegenüberliegenden Seitenwänden zur Aufnahme von plattenförmigen Trägern für Lagergut angeordnet sind, wobei eine Transportvorrichtung zur Zustellung und Entnahme der Träger aus in dem Regal angeordneten Lagerplätzen vorgesehen ist, wobei die Träger über eine Beschickungsöffnung zuführbar und entnehmbar sind und die Beschickungsöffnung Stützrollen zur horizontalen Verschiebbarkeit der Träger aufweist, die in einer Auflagefläche der Beschickungsöffnung angeordnet sind.

Derartige Lagerregale sind vorgesehen, um Lagergüter mit unterschiedlicher Höhe automatisch und platzoptimiert einzulagern, wodurch eine optimale Ausnutzung des Lagerraumes erreicht wird.

Derartige Regale sind bereits bekannt und beispielsweise in der EP 0 722 894 B1 offenbart. Dort ist ein Regalsystem beschrieben, das zwei beabstandete Lagerregaltürme mit einer dazwischen liegenden Transportvorrichtung aufweist. Die Transportvorrichtung umfasst eine Plattform, die die Lagergutträger zwischen einer Bestückungsöffnung und Lagerplätzen verfährt. Die plattenförmigen Träger für das Lagergut werden an der Beschickungsöffnung an Stützrollen aufgenommen, die in der Bodenfläche der Beschickungsöffnung angeordnet sind.

Das Verschieben der Träger in der Beschickungsöffnung verursacht eine Geräuschentwicklung. Insbesondere bei Regalsystemen mit mehreren Beschickungsöffnungen, über die Lagergutträger zugestellt werden, entsteht ein erheblicher Geräuschpegel.

Ausgehend hiervon liegt der Erfindung die Aufgabe zugrunde, ein Regal anzugeben, bei dem ein Bewegen der Träger in der Beschickungsöffnung die Geräuschentwicklung reduziert.

Zur Lösung dieser Aufgabe ist erfindungsgemäss vorgesehen, dass die Stützrollen in ihrer Lauffläche eine dämpfende Einlage aufweisen, dass in die Lauffläche eine umlaufende Nut eingebracht ist, die die ringförmige dämpfende Einlage autnimmt, dass die dämpfende Einlage elastisch ausgebildet ist und einem Kreisförmigen Querschnitt aufweist, und dass die Nut schwalbenschwanzförmig ausgebildet ist.

Durch die erfindungsgemässe Ausgestaltung der Stützrollen mit einer dämpfenden Einlage ist die Geräuschentwicklung beim Bewegen der Träger in der Beschickungsöffnung vermindert.

Vorteilhafte Ausgestaltungen der Erfindung ergeben sich aus den Unteransprüchen.

Vorteilhafterweise wird die dämpfende Einlage von einer Nut aufgenommen, die in die Lauffläche der Stützrolle eingearbeitet ist. Dabei ist die Nut vorzugsweise umlaufend angeordnet und weist eine Tiefe auf, dass eine darin eingesetzte Einlage die Nut in der Höhe überragt, so dass ein über die Lauffläche gleitender Träger zuerst mit der dämpfenden Einlage in Berührung kommt. Durch Variation der überragenden Höhe der Einlage über dem Rand der Nut kann die Geräuschdämmung angepasst werden.

In einer vorteilhaften Ausgestaltung der Erfindung ist die Einlage elastisch ausgebildet. Dadurch werden die elastischen Einlagen von Trägern, die vorwiegend aus Stahl ausgebildet sind, beim Einlaufen auf die Stützrolle zusammengepresst, wodurch die Geräuschentwicklung reduziert wird. Beim Auslaufen des Trägers von der Stützrolle geht die Einlage aufgrund ihrer Elastizität in ihre ursprüngiliche Form zurück.

In einer vorteilhaften Ausgestaltung der Erfindung wird die elastische Einlage formschlüssig in der Nut gehalten, so dass keine zusätzliche Fixierung erforderlich ist. Vorteilhaft ist die Nut schalbenschwanzförmig ausgebildet. Damit kann die Einlage in die Nut eingepresst werden und es ist keine weitere Fixierung erforderlich. Durch die Verjüngung der schwalbenschwanzförmigen Nut am oberen Rand wird ein sicherer Halt der Einlage gewährleistet. Alternativ kann die Einlage jedoch auch eingeklebt oder anders stoffschlüssig mit der Nut in der Lauffläche der Stützrolle fixiert werden.

In einer weiteren vorteilhaften Ausgestaltung der Erfindung sind die Laufflächen der Stützrollen aus Polyamid hergestellt. Polyamid weist eine hohe Abriebfestigkeit auf, wodurch sich ein geringer Verschleiss ergibt. Eine Stützrolle aus Polyamid ist darüber hinaus kostengünstig herstellbar.

Durch die erfindungsgemässe Ausgestaltung ergibt sich somit ein Lagerregal, welches im Betrieb in seiner Geräuschentwicklung reduziert ist. Die Ausgestaltung mit den erfindungsgemässen Stützrollen lässt sich kostengünstig herstellen und einfach in die Beschickungsöffnung einbauen.

Die Erfindung wird nachfolgend unter Bezugnahme auf die beigefügten schematischen Zeichnungen anhand einer bevorzugten Ausführungsform beispielhaft erläutert. Es zeigen:
- Fig. 1: eine perspektivische, teilweise geschnittene Ansicht eines Regalsystems
- Fig. 2: eine Querschnitt einer erfindungsgemässen Stützrolle
- Fig. 3: Beschickungsöffnung mit kurzen Auflagearmen und Stützrollen
- Fig. 4: Beschickungsöffnung mit abklappbaren Auflagearmen
- Fig. 5: Beschickungsöffnung mit abklappbaren Auflageschienen und Stützfüssen
- Fig.6: Beschickungsöffnung mit abgeklappten Auflageschienen und Stützfüssen

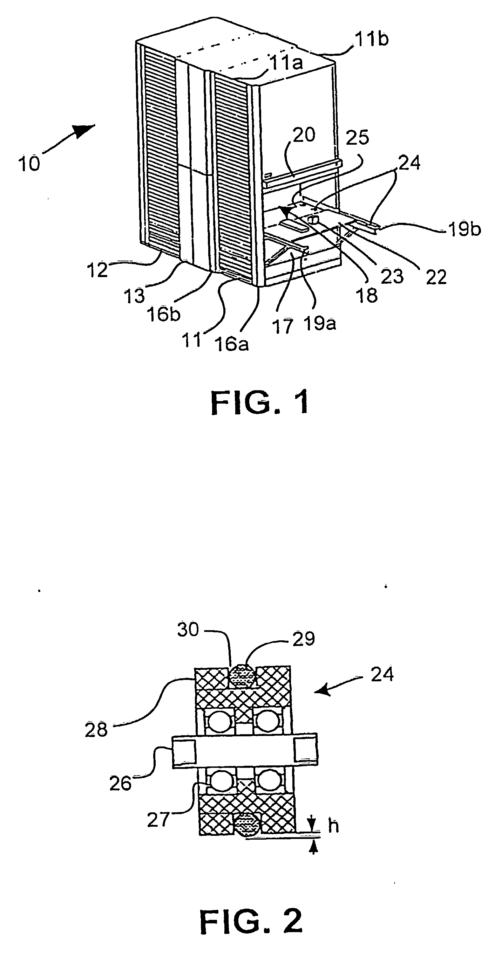

Fig. 1 zeigt ein erfindungsgemässes Regalsystem 10, das zwei mit Abstand zueinander angeordnete Regale 11, 12 aufweist. Zwischen den Regalen 11, 12 ist eine Transportvorrichtung 13 vorgesehen, die mit einer über Rollenketten angetriebenen Plattform ausgebildet ist. Die Regale 11, 12 weisen jeweils parallel zueinander ausgerichtete Seitenwände 11 a, 11 b auf, die an beabstandeten vertikalen Regalständern 16a und 16b festgelegt sind. Die Transportvorrichtung 13 weist die (nicht dargestellte) Plattform auf, die an den Rollenketten (nicht dargestellt) fixiert ist und über diese im Regalsystem 10 hoch bzw. herunter bewegt wird.

An der Stirnseite 17 des Regals 11 ist eine Beschickungsöffnung 18 vorgesehen, an der parallel zueinander ausgerichtete, nach vorn abragende Auflagearme 19a, 19b angeordnet sind. Das Lagergut 23 kann dabei über die Beschickungsöffnung 18 ein- bzw. ausgelagert werden. Eine Beleuchtungseinheit 20 dient als Beleuchtung der Beschickungsöffnung 18. Der Träger 22 wird auf den Auflagearmen 19a und 19b abgesetzt. Auf dem Träger ist das Lagergut 23 aufgenommen. Über eine nicht dargestellte Höhenmesseinrichtung wird die Höhe des einzulagernden Lagergutes 23 bestimmt.

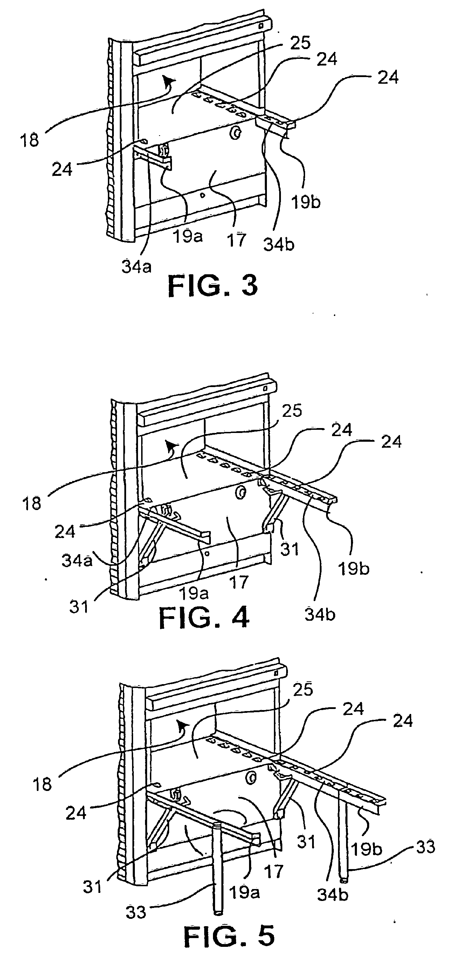

Aus Fig. 3 ist ersichtlich, dass an der Bodenfläche 25 der Beschickungsöffnung 18 Stützrollen 24 angeordnet sind. Die Stützrollen 24 befinden sich an den beiden äusseren Rändern der Bodenfläche 25. Die Stützrollen 24 sind drehbar gelagert, wobei ein Teil der Stützrollen 24 aus der Bodenfläche 25 herausragt. Die Stützrollen 24 sind auch in den Auflagearmen 19a und 19b angeordnet, die in Horizontalrichtung abragen. Dadurch wird ein Verschieben der abgesetzten Träger 22 bezüglich der Beschickungsöffnung 18 erleichtert.

Fig. 2 zeigt einen Querschnitt durch eine erfindungsgemässe Stützrolle 24. Die Stützrolle 24 wird auf einer Achse 26 geführt, wobei ein Kugellager 27 oder Gleitlager zur Lagerung der Stützrolle 24 vorgesehen ist. Die Lauffläche 28 der Stützrolle 24 besteht aus Polyamid. In die Lauffläche 28 der Stützrolle 24 ist in Umfangsrichtung eine Nut 30 eingearbeitet. Diese Nut 30 dient der Aufnahme einer dämpfenden Einlage 29. Diese Einlage 29 ist elastisch ausgebildet und besteht aus Gummi. Die ringförmige Einlage 29 weist einen kreisförmigen Querschnitt auf. Die Einlage 29 überragt die Nut 30 in der Höhe um den Betrag h.

Beim Einlaufen der Träger 22 wird das Abrollgeräusch gedämpft, so dass die Geräuschentwicklung beim Verschieben der Träger in der Beschickungsöffnung 18 reduziert wird. Der Kunststoff der Einlage 29 wird beim Einlaufen zusammengepresst. Beim Auslaufen der Träger 22 von der Stützrolle 24 nimmt der Kunststoff der Einlage 29 aufgrund seiner Elastizität wieder seine Ursprungsform an.

Fig. 3 zeigt eine Ausgestaltung der Beschickungsöffnung 18 mit kurzen starren Auflagearmen 19a und 19b. Um eine Verschiebung der Träger 22 auch auf den Auflagearmen 19a und 19b zu ermöglichen, sind auch hier Stützrollen 24 in die Auflageflächen 34a und 34 b der Auflagearmen 19 a und 19b eingebracht.

In Fig. 4 ist die Beschickungsöffnung 18 des Lagerregals 10 aus Fig. 1 vergrössert dargestellt. Die Auflagearme 19a und 19b sind hier länger ausgebildet, als bei Fig. 3, wobei die Auflagearme 19a und 19b durch Abstützvorrichtungen 31 in ihrer Tragfähigkeit verstärkt werden.

Fig. 5 zeigt eine Beschickungsöffnung 18 des Lagerregals 10 mit Auflagearmen 19a und 19b, die mit Stützfüssen versehen sind, um Träger 22 mit grös seren Lasten auf Auflagearmen 19a und 19b abzusetzen. Auch hier sind in die Auflagearme 19a und 19b Stützrollen 24 eingebracht.

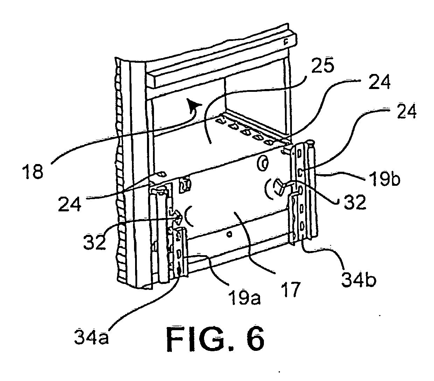

Fig. 6 zeigt eine Beschickungsöffnung 18 mit abgeklappten Auflagearmen 19a und 19b und eingeklappten Abstützvorrichtungen 31 und Stützfüssen 33. Die Auflagearme 19a und 19b weisen Handgriffe 32 auf, mit denen sie bei Bedarf ausgeklappt werden können.

### Bezugszeichenliste

- 10: Lagerregal
- 11: Regalturm
- 12: Regalturm
- 11a, 11b: Seitenwände
- 13: Transportvorrichtung
- 16a, 16b: Regalständer
- 17: Stirnseite des Regals
- 18: Beschickungsöffnung
- 19a, 19b: Auflagearme
- 20: Beleuchtung
- 22: Träger
- 23: Lagergut
- 24: Stützrolle
- 25: Auflagefläche der Beschickungsöffnung
- 26: Achse
- 27: Kugellager
- 28: Lauffläche
- 29: Einlage
- 30: Nut
- 31: Abstützvorrichtung
- 32: Handgriffe
- 33: Stützfüsse
- 34a, 34b: Auflagefläche der Auflagearme
- h: überragende Höhe der Einlage

## Patentansprüche

1. Lagerregal (10) mit einer Vielzahl von übereinander liegenden und beabstandeten Trägerauflagen, die paarweise an sich gegenüberliegenden Seitenwänden (11a, 11 b) zur Aufnahme von plattenförmigen Trägern (22) für Lagergut (23) angeordnet sind, wobei eine Transportvorrichtung (13) zur Zustellung und Entnahme der Träger (22) aus in dem Lagerregal (10) angeordneten Lagerplätzen vorgesehen ist, wobei die Träger (22) über eine Beschickungsöffnung (18) zuführbar und entnehmbar sind und die Beschickungsöffnung (18) Stützrollen (24) zur horizontalen Verschiebbarkeit der Träger (22) aufweist, die in einer Bodenfläche (25) der Beschickungsöffnung (18) angeordnet sind, **dadurch gekennzeichnet, dass** die Stützrollen (24) in ihrer Lauffläche (28) eine dämpfende Einlage (29) aufweisen, dass in die Lauffläche (28) eine umlaufende Nut (30) eingebracht ist, die die ringförmige dämpfende Einlage (29) aufnimmt, dass die dämpfende Einlage (29) elastisch ausgebildet ist und einen kreisförmigen Querschnitt aufweist, und dass die Nut (30) schwalbenschwanzförmig ausgebildet ist.

2. Lagerregal (10) nach dem Ansprüche **dadurch gekennzeichnet, dass** die Stützrollen (24) eine Lauffläche (28) aus Polyamid aufweisen.

## Claims

1. Storage rack (10) with a number of carrier supports positioned above and at a distance from each other arranged in pairs on opposing side walls (11 a, 11 b) for supporting plate-type carriers (22) for storage goods (23) whereby a transporting device (13) is provided for introducing and removing the carriers (22) from the storage spaces in the storage rack (10) and the carriers (22) are introduced and removed through a loading aperture (18) and said aperture is fitted with support rollers (24) to facilitate the horizontal sliding of the carriers (22) said rollers being arranged in the floor surface (25) of the loading aperture (18) **characterised in that** the support rollers (24) are provided with an absorbent insert (29) in their running surfaces (28), that said insert (29) fits into a circumferential groove (30) in the support rollers' running surface to receive the ringshaped absorbent insert (29), that the absorbent insert (29) is elastic in form and has a circular cross-section, and that the groove (30) is dovetailed in shape.

2. Storage rack (10) as described in Claim 1 **characterised in that** the support rollers (24) are provided with a running surface (28) of polyamide.

## Revendications

1. Rayonnage de stockage (10) comprenant une pluralité d'appuis-supports disposés les uns au-dessus des autres et à distance les uns des autres, qui sont agencés par paires sur des parois latérales (11a, 11b) pour recevoir des supports (22) en forme de plaques pour des articles à stocker (23), dans lequel est prévu un dispositif de transport (13) pour l'amenée et l'enlèvement des supports (22) hors d'emplacements de stockage ménagés dans le rayonnage de stockage (10), lesdits supports (22) pouvant être amenés et enlevés via une ouverture de chargement (18) et l'ouverture de chargement (18) présentant des galets de soutien (24) pour la translation horizontale des supports (22), galets qui sont agencés dans une surface de fond (25) de l'ouverture de chargement (18), **caractérisé en ce que** les galets de soutien (24) présentent, dans leur surface de roulement (28), un insert amortisseur (29), **en ce qu'**une gorge périphérique (30) est ménagée dans la surface de roulement (28), gorge qui reçoit l'insert amortisseur (29) de forme annulaire, **en ce que** l'insert amortisseur (29) est réalisé élastique et présente une section transversale de forme circulaire, et **en ce que** la gorge (30) est réalisée en forme de queue d'aronde.

2. Rayonnage de stockage (10) selon la revendication 1, **caractérisé en ce que** les galets de soutien (24) présentent une surface de roulement (28) en polyamide.
